# EUROPÄISCHE PATENTSCHRIFT

(11) **EP 0 832 477 B1**
(45) Veröffentlichungstag und Bekanntmachung des Hinweises auf die Patenterteilung: **22.12.1999**
(21) Anmeldenummer: 97920633.1
(22) Anmeldetag: 09.04.1997
(51) Int. Cl.: G09F 3/00

(54) **VERFAHREN ZUR HERSTELLUNG VON MEHRSCHICHTIGEN MIKROPARTIKELN**
PROCESS FOR PRODUCING MULTILAYERED MICROPARTICLES
PROCEDE DE PRODUCTION DE MICROPARTICULES A COUCHES MULTIPLES

(30) Priorität: 10.04.1996 DE 19614174
(43) Veröffentlichungstag der Anmeldung: 01.04.1998
(73) Patentinhaber: Simons Druck + Vertrieb Gmbh, 48301 Nottuln (DE)
(72) Erfinder: SIMONS, Rolf, D-48301 Nottuln (DE)
(74) Vertreter: Schulze Horn, Stefan, Dipl.-Ing. M.Sc.
(86) Internationale Anmeldenummer: EP9701762
(87) Internationale Veröffentlichungsnummer: WO9738409

(56) Entgegenhaltungen:
- DE-A- 2 607 014
- DE-A- 2 651 528
- US-A- 4 390 452
- US-A- 4 606 927
- US-A- 5 118 369

## Beschreibung

Die vorliegende Erfindung betrifft ein Verfahren zur Herstellung von mehrschichtigen Mikropartikeln zur Kennzeichnung und nachträglichen Identifizierung von Stoffen oder Gegenständen aller Art, auch Tiere und Pflanzen, mit folgenden Verfahrensschritten:
- auf einen bahn- oder bogenförmigen Träger werden nacheinander mehrere Kennzeichnungsschichten aufgetragen, wobei das Auftragen jeder Kennzeichnungsschicht in flüssiger Form erfolgt und wobei nach dem Auftragen jeder Kennzeichnungsschicht eine Trocknung und/oder Härtung erfolgt, bevor die nächste Kennzeichnungsschicht aufgetragen wird, bis ein Schichtenstapel mit einer gewünschten Art und Folge von Kennzeichnungsschichten gebildet ist,
- der Träger und der Schichtenstapel werden voneinander getrennt und
- der Schichtenstapel wird unter Erhaltung der Kennzeichnungsschichtenfolge zu den mehrschichtigen Mikropartikeln zerkleinert.

Ein Verfahren der genannten Art ist aus der GB-PS 1 568 699 bekannt. Bei diesem bekannten Verfahren nach dem Stand der Technik werden für das Auftragen der einzelnen Kennzeichnungsschichten in flüssiger Form übliche Beschichtungstechniken verwendet, wobei eine bevorzugte Dicke jeder Kennzeichnungsschicht von zwischen etwa 5 und 50 µm genannt wird. Als Träger für die Kennzeichnungsschichten während der Herstellung des Schichtenstapels sind hier Folien, vorzugsweise Polyesterfolien genannt. Für das Beschichten des Trägers mit den einzelnen Kennzeichnungsschichten in flüssiger Form wird eine Beschichtungswalze (Wire-Wound Rod) verwendet. Diese Beschichtungswalze besitzt eine Oberfläche in Form eines um den Außenumfang der Walze gewickelten runden Drahtes, wodurch sich eine Oberfläche der Beschichtungswalze ergibt, die im Schnitt gesehen durch eine Aneinandereihung von konvexen Halbkreisen gebildet ist. Wenn diese Beschichtungswalze auf dem ebenen Träger abrollt, wird durch die verbleibenden Zwischenräume zwischen den konvexen Halbkreisen einerseits und dem Träger andererseits die Kennzeichnungsschicht auf den Träger oder eine vorher schon aufgetragene und schon getrocknete oder gehärtete Kennzeichnungsschicht aufgetragen. Durch die Oberflächenspannung innerhalb der noch flüssigen Kennzeichnungsschicht vergleichmäßigt sich deren Dicke auf ein im wesentlichen einheitliches Maß. Damit diese Vergleichmäßigung der Schichtdicke auch tatsächlich eintritt, muß eine relativ große Schichtdicke verwendet werden, da sonst andere Kräfte die Oberflächenspannungskräfte überwiegen, so daß die selbsttätige Einstellung einer gleichmäßigen Schichtdicke nicht mehr erreicht wird. In der Praxis haben die aufgetragenen Kennzeichnungsschichten in ihrem flüssigen Zustand eine Dicke von etwa 25 µm; nach Trocknung verbleibt dann eine Schichtdicke, die bis zu etwa 5 µm heruntergeht, wobei dieser Wert aber nur bei Versuchen unter Laborbedingungen erreichbar sein dürfte; in der Praxis wurden bisher auf dem einschlägigen Markt keine Mikropartikel mit Schichtdicken unter 8 µm festgestellt. Dünnere Schichtdicken der Kennzeichnungsschichten lassen sich mit den gängigen Beschichtungsverfahren, wie sie bisher bei der Herstellung von Mikropartikeln angewendet werden, nicht erzielen.

Ein weiteres Verfahren der eingangs genannten Art ist bekannt aus der US-PS 4 390 452. Das hierin beschriebene Verfahren entspricht hinsichtlich der Beschichtungstechnik dem Verfahren gemäß der weiter oben bereits genannten Schrift; die Schichtdicken der Kennzeichnungsschichten betragen in den dargelegten Ausführungsbeispielen in dieser US-PS allerdings nicht unter 15 µm je Kennzeichnungsschicht.

Aus der DE 26 07 014 C2 ist ein anderes Verfahren zur Herstellung von mehrschichten Mikropartikeln für den oben genannten Verwendungszweck bekannt. Bei diesem Verfahren werden die Mikropartikel nach einem Doppelschälverfahren hergestellt. Zunächst werden dazu einzelne farbige Kunststoffolien in der gewünschten Folge aufeinandergestapelt, wobei die Dicke jeder Folie zwischen etwa 12 und 200 µm beträgt. Aus dem Folienstapel werden Scheiben mit einem Mittelloch herausgeschnitten, die man auf einen Dorn stapelt. Diesen Stapel erwärmt man, um die Folienschichten zu verschmelzen und das Material zu einem Knüppel umzuformen, den man dann zu einem Band schält. Aus diesem geschälten Band schneidet man wiederum Scheiben mit einem Mittelloch und stapelt sie auf einen Dorn. Auch diesen Stapel erwärmt man, um die Scheiben zu einem Knüppel zu verschmelzen, den man dann ebenfalls zu einem Band schält. Dieses zuletzt erzeugte Band bringt man in ein Lösungsmittel ein, das selektiv innerhalb des Bandes zuvor untergebrachte Freigabematerialschichten löst. Auf diese Weise entstehen die einzelnen Mikropartikel. Ersichtlicherweise ist dieses Verfahren äußerst aufwendig und kompliziert und deshalb nur von begrenzter Wirtschaftlichkeit.

Die weiter oben erläuterten Verfahren gemäß dem Stand der Technik sind demgegenüber zwar schon wesentlich wirtschaftlicher, jedoch ist auch hier die Produktivität bei der Herstellung beschränkt und deshalb verbesserungsbedürftig. Außerdem haftet allen bekannten Herstellungsverfahren der Nachteil an, daß sie im Hinblick auf die erzielbaren minimalen Schichtdicken der einzelnen Kennzeichnungsschichten und damit hinsichtlich der Gesamtdicke der mehrschichtigen Mikropartikel auf relativ große Werte begrenzt sind. Hierdurch werden an sich wünschenswerte Anwendungen für derartige Mikropartikel allein schon aufgrund der Tatsache ausgeschlossen, daß die Mikropartikel zu groß sind. Ein weiterer Nachteil bei den bekannten Mikropartikeln wird darin gesehen, daß deren Hitzebeständigkeit auf ca. 300°C beschränkt ist, wodurch ebenfalls viele Anwendungen ausgeschlossen werden, bei denen die gekennzeichneten Stoffe oder Gegenstände hohen Temperaturen ausgesetzt sind.

Für die vorliegende Erfindung stellt sich deshalb die Aufgabe, Verfahren der eingangs genannten Art zu schaffen, die die aufgeführten Nachteile vermeiden und mit denen insbesondere mit einer hohen Wirtschaftlichkeit Mikropartikel mit geringeren Schichtdicken der einzelnen Kennzeichnungsschichten und dadurch auch mit geringerer Gesamtdicke herstellbar sind, ohne daß die Zahl der Codierungsmöglichkeiten beschränkt wird. Zusätzlich soll die Möglichkeit geschaffen werden, Mikropartikel mit einer verbesserten Hitzebeständigkeit herzustellen.

Eine erste Lösung der gestellten Aufgabe gelingt dadurch, daß das Auftragen der einzelnen Kennzeichnungsschichten mittels eines Druckverfahrens erfolgt. Geeignete Druckverfahren sind beispielsweise das Hochdruckverfahren, das Tiefdruckverfahren, das Flachdruckverfahren oder Durchdruckverfahren, wie Siebdruck oder Schablonendruck.

Eine Ausgestaltung dieser erfindungsgemäßen Verfahren schlägt vor, daß das Auftragen jeder Kennzeichnungsschicht statt in flüssiger Form in pastöser Form erfolgt. Ein Auftragen der Kennzeichnungsschicht in dieser pastösen Form ist mit den zuvor genannten Druckverfahren, insbesondere mit Durchdruckverfahren, ohne weiteres möglich. Vorteilhaft wird hierdurch die Verwendung von gänzlich neuen Materialien für die Kennzeichnungsschichten ermöglicht, die nicht in flüssiger Form zur Verfügung stehen.

Eine bevorzugte Weiterbildung in dieser Hinsicht sieht vor, daß das Auftragen jeder Kennzeichnungsschicht in einem tixotropen Zustand erfolgt. Hierdurch wird insbesondere die Handhabung und Verarbeitung der Substanzen, die für die Kennzeichnungsschichten verwendet werden, vereinfacht.

Um die Herstellung von Mikropartikeln insbesondere mit höherer Hitzebeständigkeit und/oder höherer chemischer Beständigkeit zu ermöglichen, wird weiterhin vorgeschlagen, daß als Grundsubstanz für die Kennzeichnungsschichten Glaspulver und/oder Emailpulver mit zugesetzten hitzebeständigen Farbpigmenten verwendet wird und daß diese Grundsubstanz vor dem Auftragen durch Zugabe von Transferlack und/oder Drucköl in pastöse Form gebracht wird. Durch eine gezielte Wärmebehandlung lassen sich auch aus dieser Grundsubstanz Mikropartikel herstellen, deren einzelne Kennzeichnungsschichten in sich homogen und stabil sind und gleichzeitig untereinander im Schichtenstapel einen festen Zusammenhalt haben.

Ein weiteres erfindungsgemäßes Verfahren, das ebenfalls insbesondere zur Herstellung von Mikropartikeln mit höherer Hitzebeständigkeit und/oder höherer chemischer Beständigkeit geeignet ist, ist dadurch gekennzeichnet, daß das Auftragen jeder Kennzeichnungsschicht statt in flüssiger Form in trockenem Zustand in Pulverform mittels eines Bronzierverfahrens erfolgt. Diese alternative Lösung der eingangs gestellten Aufgabe erlaubt vorteilhaft die Verwendung von trockenen Pulvern für die Herstellung der Kennzeichnungsschichten, wodurch weitere Materialien für die Herstellung der Mikropartikel verwendbar werden, die weder in flüssiger noch in pastöser Form herstellbar oder verarbeitbar sind.

In weiterer Ausgestaltung dieses zuletzt beschriebenen Verfahrens wird vorteilhaft als Grundsubstanz für die Kennzeichnungsschichten Glaspulver und/oder Emailpulver mit zugesetzten hitzebeständigen Farbpigmenten verwendet. Auf diese Weise lassen sich besonders hitzebeständige Mikropartikel herstellen, die besonders gut für die Kennzeichnung von Sprengstoffen oder Sprengstoffzündern geeignet sind.

Eine weitere alternative Lösung der gestellten Aufgabe gelingt dadurch, daß das Auftragen der einzelnen Kennzeichnungsschichten mittels eines Spritzlackierverfahrens erfolgt.

Eine vierte Lösung der gestellten Aufgabe gelingt dadurch, daß das Auftragen der einzelnen Kennzeichnungsschichten mittels eines Walzenlackierverfahrens erfolgt.

In der Fachwelt bestand bisher die einhellige Auffassung, daß die einzelnen Kennzeichnungsschichten zur Bildung des Schichtenstapels für die Mikropartikel nur durch Beschichtung mittels Beschichtungswalzen unter Verwendung flüssiger Ausgangsmaterialien erzeugt werden könnten. Für die Fachwelt überraschend hat sich nun gezeigt, daß die erfindungsgemäß vorgeschlagenen Verfahren wider Erwarten geeignet sind, den Schichtenstapel aus einer Folge von Kennzeichnungsschichten zur Herstellung von Mikropartikeln in der gewünschten Qualität und Reproduzierbarkeit zu erzeugen. Darüberhinaus erlauben die erfindungsgemäßen Verfahren sogar eine wirtschaftlichere Fertigung, weil sie wesentlich schneller arbeiten als Walzenbeschichtungsverfahren. Schließlich wird auch noch vorteilhaft eine geringere, aber dennoch gleichmäßige Dicke der einzelnen Kennzeichnungsschichten ermöglicht, was die Herstellung von insgesamt kleineren Mikropartikeln ohne Abstriche bei ihrer Haltbarkeit und Widerstandsfähigkeit und bei der Zahl der Codierungsmöglichkeiten erlaubt. Weiterhin können vorteilhaft innerhalb der erfindungsgemäßen Verfahren für das Auftragen der einzelnen Kennzeichnungsschichten im flüssigen Zustand Materialien verwendet werden, die aus dem Stand der Technik, z.B. den oben zitierten Schriften, an sich bekannt sind. Höchstens im Hinblick auf die Viskosität des flüssigen Materials für die Herstellung der Kennzeichnungsschichten und/oder hinsichtlich der Feinheit der verwendeten Farbpigmente ist eine gewisse Anpassung oder Auswahl erforderlich, die der Fachmann auf dem Gebiet der erfindungsgemäß genannten Druck- und Lackierverfahren aber beherrscht. Gleichzeitig bieten die erfindungsgemäßen Verfahren aber die Möglichkeit, das Auftragen der Kennzeichnungsschichten in einem pastösen oder sogar trockenen pulverförmigen Zustand vorzunehmen, wie oben schon erläutert, was die Verwendung gänzlich neuer, insbesondere hitzebeständiger Materialien für die Kennzeichnungsschichten erlaubt.

Eine Weiterbildung aller Verfahren der vorstehend erläuterten Art ist dadurch gekennzeichnet, daß für den Träger Papier verwendet wird. Ein solcher Träger ist sehr kostengünstig und trägt damit zu einer guten Wirtschaftlichkeit des Verfahrens bei.

In diesem Zusammenhang wird weiter vorgeschlagen, daß das Trennen von Träger und Schichtenstapel in einem Flüssigkeitsbad erfolgt, in welchem der Träger erweicht und/ oder aufgelöst wird. Im einfachsten Fall kann das Flüssigkeitsbad ein Wasserbad sein, dem gegebenenfalls zusätzliche Mittel beigegeben werden, die das Erweichen und/oder Auflösen des Trägers beschleunigen.

Schließlich wird noch vorgeschlagen, daß der von dem Träger getrennte Schichtenstapel vor dem Zerkleinern getrocknet und/oder gehärtet und/oder getempert wird, wobei auch Trocknung und Härtung bevorzugt durch Wärme bewirkt werden. Dieser Schritt der Trocknung und/oder Härtung und/oder Temperung ist zweckmäßig, um vor dem nachfolgenden Zerkleinern des Schichtenstapels in die einzelnen Mikropartikel den einzelnen Schichten in sich und dem Schichtenstapel für diese Zerkleinerung günstige mechanische Eigenschaften zu verleihen, insbesondere eine relativ hohe Sprödigkeit bei gleichzeitig guter Stabilität und festem Zusammenhalt der Schichten. Das Zerkleinern des Schichtenstapels kann auf an sich bekannte Art und Weise z.B. in geeigneten Mühlen, wie Kugelmühlen, erfolgen. Diese Zerkleinerung erfolgt zweckmäßig nur so weit, daß innerhalb der überwiegenden Zahl der dabei entstehenden Mikropartikel jeweils noch die volle Kennzeichnungsschichtenfolge enthalten ist, um eine Identifizierung von mit den Mikropartikeln gekennzeichneten Stoffen oder Gegenständen zweifelsfrei zu ermöglichen. Nach dem Zerkleinerungsvorgang kann zusätzlich auch noch eine Sortierung der Mikropartikel erfolgen, wobei dann diejenigen Mikropartikel, die nicht mehr über die volle Kennzeichnungsschichtenfolge verfügen, aussortiert werden, um sie von der weiteren Verwendung für Kennzeichnungszwecke auszuschließen.

Aufgrund der mit den erfindungsgemäßen Verfahren möglich gewordenen Herstellung von insgesamt gegenüber dem Stand der Technik wesentlich kleineren Mikropartikeln, die in der Praxis Schichtdicken der einzelnen Kennzeichnungsschichten bis herunter zu 1 µm haben können, und/oder von wesentlich hitzebeständigeren Mikropartikeln werden neue Anwendungen der Mikropartikel zur Kennzeichnung von Stoffen oder Gegenständen möglich, die es bisher nicht gab. Zu denken ist hier beispielsweise an Spezialpapiere für die Herstellung von Banknoten oder Aktien sowie allgemein an alle Gegenstände, die selbst eine sehr geringe Dicke aufweisen und in denen deshalb nur sehr kleine Mikropartikel untergebracht werden können, ohne die Eigenschaften der gekennzeichneten Gegenstände zu beeinträchtigen. Weiter ist hier an Stoffe oder Gegenstände zu denken, die während ihrer Verwendung oder ihres Gebrauchs hohen Temperaturen ausgesetzt sind. Rein beispielhaft seien hier auch noch Kennzeichnungsfäden genannt, die mit Mikropartikeln als integraler Bestandteil hergestellt sind und die vorzugsweise für die Kennzeichnung von Geweben, Textilien und Etiketten dafür geeignet sind und die zu einer verbesserten Bekämpfung der gerade auf diesem Gebiet weit verbreiteten Produktpiraterie beitragen können.

Die einzelnen Kennzeichnungsschichten unterscheiden sich vorzugsweise in ihren optischen Eigenschaften, in erster Linie in ihrer Farbe voneinander, wobei die Schichten oder einzelne Schichten auch fluoreszierende oder phosphoreszierende Eigenschaften haben können. Auch eine Differenzierung durch unterschiedliche magnetische Eigenschaften ist möglich. Eine Magnetisierung kann außerdem das spätere Auffinden und/oder Trennen von Mikropartikeln erleichtern.

Die spätere Identifizierung und Dekodierung der Mikropartikel ist auch bei den erfindungsgemäßen geringen Schichtdicken von bis zu minimal 1 µm z.B. mit geeigneten optischen Vergrößerungseinrichtungen und/oder magnetischen Meßgeräten ohne weiteres möglich, so daß die Verkleinerung hier in der Praxis keine ernstliche Beeinträchtigung der Erkennbarkeit der Kennzeichnungsschichtenfolge der Mikropartikel mit sich bringt.

## Patentansprüche

1. Verfahren zur Herstellung von mehrschichtigen Mikropartikeln zur Kennzeichnung und nachträglichen Identifizierung von Stoffen oder Gegenständen aller Art, auch Tiere und Pflanzen, mit folgenden Verfahrensschritten:
- auf einen bahn- oder bogenförmigen Träger werden nacheinander mehrere Kennzeichnungsschichten aufgetragen, wobei das Auftragen jeder Kennzeichnungsschicht in flüssiger Form erfolgt und wobei nach dem Auftragen jeder Kennzeichnungsschicht eine Trockung und/oder Härtung erfolgt, bevor die nächste Kennzeichnungsschicht aufgetragen wird, bis ein Schichtenstapel mit einer gewünschten Art und Folge von Kennzeichnungsschichten gebildet ist,
- der Träger und der Schichtenstapel werden voneinander getrennt und
- der Schichtenstapel wird unter Erhaltung der vollen Kennzeichnungsschichtenfolge zu den mehrschichtigen Mikropartikeln zerkleinert,
**dadurch gekennzeichnet,**
daß das Auftragen der einzelnen Kennzeichnungsschichten mittels eines Druckverfahrens erfolgt.

2. Verfahren nach Anspruch 1, dadurch gekennzeichnet, daß als Druckverfahren ein Hochdruckverfahren eingesetzt wird.

3. Verfahren nach Anspruch 1, dadurch gekennzeichnet, daß als Druckverfahren ein Tiefdruckverfahren eingesetzt wird.

4. Verfahren nach Anspruch 1, dadurch gekennzeichnet, daß als Druckverfahren ein Flachdruckverfahren eingesetzt wird.

5. Verfahren nach Anspruch 1, dadurch gekennzeichnet, daß als Druckverfahren ein Durchdruckverfahren eingesetzt wird.

6. Verfahren nach einem der vorangehenden Ansprüche, dadurch gekennzeichnet, daß das Auftragen jeder Kennzeichnungsschicht statt in flüssiger Form in pastöser Form erfolgt.

7. Verfahren nach Anspruch 6, dadurch gekennzeichnet, daß das Auftragen jeder Kennzeichnungsschicht in einem tixotropen Zustand erfolgt.

8. Verfahren nach Anspruch 6 oder 7, dadurch gekennzeichnet, daß als Grundsubstanz für die Kennzeichnungsschichten Glaspulver und/oder Emailpulver mit zugesetzten hitzebeständigen Farbpigmenten verwendet wird und daß diese Grundsubstanz vor dem Auftragen durch Zugabe von Transferlack oder Drucköl in pastöse Form gebracht wird.

9. Verfahren nach dem Oberbegriff von Anspruch 1, dadurch gekennzeichnet, daß das Auftragen jeder Kennzeichnungsschicht statt in flüssiger Form in trockenem Zustand in Pulverform mittels eines Bronzierverfahrens erfolgt.

10. Verfahren nach Anspruch 9, dadurch gekennzeichnet, daß als Grundsubstanz für die Kennzeichnungsschichten Glaspulver und/oder Emailpulver mit zugesetzen hitzebeständigen Farbpigmenten verwendet wird.

11. Verfahren nach dem Oberbegriff von Anspruch 1, dadurch gekennzeichnet, daß das Auftragen der einzelnen Kennzeichnungsschichten mittels eines Spritzlackierverfahrens erfolgt.

12. Verfahren nach dem Oberbegriff von Anspruch 1, dadurch gekennzeichnet, daß das Auftragen der einzelnen Kennzeichnungsschichten mittels eines Walzenlackierverfahrens erfolgt.

13. Verfahren nach einem der vorangehenden Ansprüche, dadurch gekennzeichnet, daß für den Träger Papier verwendet wird.

14. Verfahren nach Anspruch 13, dadurch gekennzeichnet, daß das Trennen von Träger und Schichtenstapel voneinander in einem Flüssigkeitsbad erfolgt, in welchem der Träger erweicht und/oder aufgelöst wird.

15. Verfahren nach Anspruch 14, dadurch gekennzeichnet, daß der von dem Träger getrennte Schichtenstapel vor seiner Zerkleinerung getrocknet und/oder gehärtet und/oder getempert wird.

## Claims

1. A process for producing multilayered microparticles for marking and later identifying substances or objects of any desired type, even animals and plants, comprising the following process steps:
- several marking layers are successively applied each in the liquid state onto a web-shaped or sheet-shaped substrate, each layer being dried and/or hardened before the next layer is applied, until a stack of layers of the desired type and in the desired order of the marking layers is obtained,
- the substrate is separated from the stack of layers, and
- the stack of layers is crushed into the multilayered particles without affecting the integrity of the complete series of the marking layers,
**characterized in**
that the individual marking layers are applied in a printing process.

2. Process according to claim 1, characterized in that a letterpress printing process is used as the printing process.

3. Process according to claim 1, characterized in that a rotogravure printing process is used as the printing process.

4. Process according to claim 1, characterized int that a flatbed printing process is used as the printing process.

5. Process according to claim 1, characterized in that a screen printing process is used as the printing process.

6. Process according to one of the preceeding claims, characterized in that each marking layer is applied in the pasty instead of the liquid state.

7. Process according to claim 6, characterized in that each marking layer is applied in the thixotrope state.

8. Process according to claim 6 or 7, characterized in that glass powder and/or enamel powder with added heat-resistant colouring bodies is used as a base substance for the marking layers, and this base substance prior to its application is transferred into the pasty state by adding transfer lacquer or printing oil.

9. Process according to the preamble of claim 1, characterized in that each marking layer is applied in the dry state in form of a powder instead of the liquid state by a bronzing process.

10. Process according to claim 9, characterized in that glass powder and/or enamel powder with added heat-resistant colouring bodies is used as the base substance for the marking layers.

11. Process according to the preamble of claim 1, characterized in that the individual marking layers are applied by a spray painting process.

12. Process according to the preamble of claim 1, characterized in that the individual marking layers are applied by a roll coating process.

13. Process according to one of the preceeding claims, characterized in that paper is used for the substrate.

14. Process according to claim 13, characterized in that the substrate is separated from the stack of layers in a liquid bath wherein the substrate is softened and/or dissolved.

15. Process according to claim 14, characterized in that the stack of layers separated from the substrate prior to its crushing is dried and/or hardened and/ or after-baked.

## Revendications

1. Procédé de fabrication de microparticules à couches multiples, destinées à la caractérisation et à l'identification subséquente de matériau ou d'objets de toute sorte, y compris animaux et végétaux, comprenant les étapes consistant à :
- déposer successivement sur un support linéaire ou courbe plusieurs couches de caractérisation, le dépôt de chacune des couches de caractérisation s'effectuant sous forme liquide et chaque couche de caractérisation étant soumise, après le dépôt, à un séchage et/ou à un durcissement avant que la couche suivante ne soit déposée, jusqu'à obtention d'un empilement de couches de natures souhaitées et selon la succession désirée ;
- séparer le support et l'empilement de couches l'un de l'autre ;
- réduire ledit empilement de couches en microparticules à couches multiples, en conservant l'intégrité de l'enchaînement de la succession des couches ;
et caractérisé en ce que le dépôt des différentes couches de caractérisation s'effectue au moyen d'un procédé d'impression.

2. Procédé selon la revendication 1 caractérisé en ce que, comme procédé d'impression. on met en oeuvre un procédé d'impression en relief.

3. Procédé selon la revendication 1 caractérisé en ce que, comme procédé d'impression, on met en oeuvre un procédé d'impression en creux.

4. Procédé selon la revendication 1 caractérisé en ce que, comme procédé d'impression, on met en oeuvre un procédé d'impression à plat.

5. Procédé selon la revendication 1 caractérisé en ce que, comme procédé d'impression, on met en oeuvre un procédé d'impression par pochoirs.

6. Procédé selon l'une quelconque des revendications précédentes caractérisé en ce que, au lieu de s'effectuer sous forme liquide, le dépôt de chaque couche de caractérisation a lieu à l'état pâteux.

7. Procédé selon la revendication 6 caractérisé en ce que le dépôt de chaque couche de caractérisation s'effectue à un état tixotrope.

8. Procédé selon la revendication 6 ou 7 caractérisé
en ce qu'on utilise comme substance de base pour les couches de caractérisation de la poudre de verre et/ou de la poudre d'émail additionnée(s) de pigments colorés résistants aux hautes températures
et en ce que ladite substance de base est mise sous forme pâteuse par addition d'une laque de transfert ou d'une huile de pression.

9. Procédé selon le concept général de la revendication 1 caractérisé en ce que, au lieu de s'effectuer sous forme liquide, le dépôt de chaque couche de caractérisation a lieu à l'état sec, sous forme de poudre. au moyen d'un procédé de bronzage.

10. Procédé selon la revendication 9 caractérisé en ce qu'on utilise comme substance de base pour les couches de caractérisation de la poudre de verre et/ou de la poudre d'émail additionnée(s) de pigments colorés résistants aux hautes températures.

11. Procédé selon le concept général de la revendication 1, caractérisé en ce que le dépôt des différentes couches de caractérisation s'effectue à l'aide d'un procédé de laquage au pistolet.

12. Procédé selon le concept général de la revendication 1, caractérisé en ce que le dépôt des différentes couches de caractérisation s'effectue à l'aide d'un procédé d'enduction au rouleau.

13. Procédé selon l'une quelconque des revendications précédentes caractérisé en ce que, comme support, on utilise du papier.

14. Procédé selon la revendication 13 caractérisé en ce que la séparation du support et de l'empilement des couches l'un de l'autre s'effectue dans un bain liquide dans lequel le support est désagrégé et/ou dissout.

15. Procédé selon la revendication 14 caractérisé en ce que l'empilement de couches, séparé de son support, est séché et/ou durci et/ou étuvé avant d'être réduit en petites particules.
